# EUROPÄISCHE PATENTSCHRIFT

(11) **EP 1 889 766 B1**
(45) Veröffentlichungstag und Bekanntmachung des Hinweises auf die Patenterteilung: **18.05.2016**
(21) Anmeldenummer: 07012422.7
(22) Anmeldetag: 26.06.2007
(51) Int. Cl.: B60T 8/32, B60T 13/68

(54) **Elektropneumatisches Bremssystem und Verfahren zur Steuerung eines elektropneumatischen Bremssystems**
Electro-pneumatic braking system and method for actuating an electro-pneumatic braking system
Système de frein électropneumatique et procédé destiné à la commande d'un système de frein électropneumatique

(30) Priorität: 18.08.2006 DE 102006038947
(43) Veröffentlichungstag der Anmeldung: 20.02.2008
(73) Patentinhaber: WABCO GmbH, 30453 Hannover (DE)
(72) Erfinder: Lichtenberg, Wolfgang, 30457 Hannover (DE); Schappler, Hartmut, 30455 Hannover (DE); Willms, Jens, 30926 Seelze (DE)
(74) Vertreter: Günther, Constantin

(56) Entgegenhaltungen:
- EP-A1- 0 110 119
- EP-A2- 0 399 162
- EP-A2- 0 845 397
- DE-C1- 4 028 290

## Beschreibung

Die Erfindung betrifft ein elektropneumatisches Bremssystem und ein Verfahren zur Steuerung eines elektropneumatischen Bremssystems.

Bei elektropneumatischen Bremssystemen von Nutzfahrzeugen wird ein Vorratsdruck eines Druckmittelspeichers bzw. Druckluftspeichers über eine Ventileinrichtung auf eine Bremsleitung gegeben, die zu den jeweiligen Radmodulen führt; bei zwei- oder mehrkanaligen Bremssystemen werden z. B. die beiden Radmodule einer Achse durch eine Ventileinrichtung angesteuert. Die Ansteuerung der Ventileinrichtung erfolgt in der Regel über eine dezentrale Steuereinrichtung, die den in der Bremsleitung eingestellten Bremsdruck über einen Drucksensor ermittelt. Die dezentrale Steuereinrichtung, die Ventileinrichtung und der Drucksensor bilden hierbei einen Bremsdruckmodulator, der eine Druckregelung durchführt und den geregelten Druck an die Radmodule ausgibt, in denen in der Regel ergänzend bzw. überlagernd eine Schlupfregelung bzw. Antiblockierregelung durchgeführt wird.

Die EP0399162A2 betrifft einen Bremskreis mit wenigstens einer durch Zuführung von Bremsdruck betätigten Zuspanneinrichtung, sowie mit einer mechanischen Bremsdrucksteuereinrichtung und einer elektrischen Bremsdrucksteuereinrichtung, wobei die mechanische Bremsdrucksteuereinrichtung eine Rückhalteeinrichtung enthält, welche den in der mechanischen Bremsdrucksteuereinrichtung eingestellten Bremsdruck wenigstens im wesentlichen solange zurückhält, wie die elektrische Bremsdrucksteuereinrichtung einen Bremsdruck aussteuert.

Die EP0845397A2 betrifft eine Druckregelvorrichtung für elektropneumatische Bremsanlagen von Fahrzeugen, insbesondere Nutzfahrzeugen, mit durch Elektromagnete betätigbaren Ein- und Auslassventilen zur gesteuerten Be- und Entlüftung der Verbraucher der Bremsanlage, wobei das zwischen Druckluftvorrat und Verbraucher geschaltete Einlassventil und/oder das zwischen Verbraucher und Druckentlastung geschaltete Auslassventil mit einem über dem Kolbenhub seines Ventilkolbens veränderbaren Einlassquerschnitt bzw. Auslassquerschnitt versehen ist; und wobei eine vom Einlassventil gespeiste, mit dem Verbraucher in Verbindung stehende Druckmittelkammer der Druckregelvorrichtung hinsichtlich des eingesteuerten bzw. des abzubauenden Druckes unter kontinuierlicher Überwachung eines Drucksensors steht, welcher die ermittelten Druckwerte an eine elektronische Steuereinheit zur Betätigung des Elektromagneten des Einlassventils bzw. Auslassventils weiterleitet. Die elektronische Steuereinheit vergleicht das vorgegeben Bremssignal mit dem Istwert des Bremsdruckes und regelt das Einlassventil entsprechend.

Die EP0110119A1 betrifft eine Mehrkreis-Druckmittel-Bremsanlage, mit mindestens einem den Bremszylindern vorgeordneten, von einer Betriebsbremseinrichtung ausgesteuerten Ventil, wobei das mindestens eine Ventil an beide, von der Betriebsbremseinrichtung mindestens mittelbar angesteuerte Bremskreise angeschlossen ist und dass am Eingang des pneumatisch gesteuerten Kreises des mindestens einen Ventils ein druckempfindlicher Sensor angeordnet ist zur Überprüfung des pneumatischen Signals auf Verfügbarkeit und/oder Funktionsüberwachung.

Die Bremsdruckregelung wird im Allgemeinen in Abhängigkeit einer Bremsanforderung durchgeführt, die z. B. von einem Zentralmodul bzw. einer zentralen Steuereinrichtung über einen fahrzeuginternen Datenbus an die dezentrale Steuereinrichtung übermittelt wird, wobei das Zentralmodul die Bremsanforderung wiederum aus einem von dem Bremswertgeber ausgegebenen Sollbremssignal oder einem weiteren System, z. B. einem Notbremssystem, ermittelt.

Die Bremsdruckregelung wird in der Regel bis zu einem Grenzdruck von z. B. 10 bar durchgeführt, wobei in der Regel ein höherer Vorratsdruck von z. B. 12 bar zur Verfügung steht. Der höhere Vorratsdruck wird für die Abbremsung des Fahrzeuges nicht zur Verfügung gestellt, da die Sollwertvorgabe des Bremssystems den Wertebereich des Drucksensors nicht übersteigt.

Bei einer Notbremsung durch den Fahrer oder ein Notbremssystem wird der angeforderte Bremsdruck bzw. Soll-Bremsdruck auf seinen Maximalwert gesetzt. Da der Wertebereich des vom Drucksensor ausgegebenen Drucksignals jedoch nach oben begrenzt ist, kann der im Prinzip zur Verfügung stehende höhere Vorratsdruck nicht vollständig ausgenutzt werden. Der maximal einstellbare Bremsdruck des elektropneumatischen Bremssystems ist somit durch den Wertebereich des Drucksignals des Drucksensors begrenzt.

Der Erfindung liegt die Aufgabe zu Grunde, ein elektropneumatisches Bremssystem und ein Verfahren zur Steuerung des Bremssystems zu schaffen, die zum einen im Normalbetrieb eine sichere Bremsdruckregelung gewährleisten und zum anderen eine schnelle Bremsung bei höheren Bremskraftanforderungen ermöglichen.

Diese Aufgabe wird durch ein elektropneumatisches Bremssystem nach Anspruch 1 und ein Verfahren nach Anspruch 9 gelöst. Die Unteransprüche beschreiben bevorzugte Weiterbildungen.

Erfindungsgemäß wird somit überprüft, ob (durch den Fahrer oder ein weiteres System, z. B. ein Notbremssystem) eine höhere, z. B. maximal mögliche Bremskraft gefordert wird und weiterhin, ob der auszusteuernde Bremsdruck durch den Maximalwert des Drucksignals des Drucksensors begrenzt wird.

Falls ein derartiger Zustand erkannt wird, wird die Ventileinrichtung über den im normalen Druckregelungsmodus eingestellten Wert hinaus geöffnet und somit ein höherer, insbesondere maximal möglicher Bremsdruck ausgesteuert.

Somit wird ein Maximalbremsmodus eingestellt, bei dem eine Drucksteuerung über den vom Drucksensor erfassten Grenzbremsdruck hinaus ermöglicht wird, auch wenn der Drucksensor hier keine zuverlässigen Signale mehr liefert. Hierzu können noch weitere Sicherheitsabfragen durchgeführt werden.

Die Drucksteuerung oberhalb des Grenzbremsdrucks kann in Abhängigkeit der verwendeten Ventileinrichtung, z. B. von Proportionalventilen oder Taktventilen, erfolgen. Der jeweilige Bremsdruck kann gemäß einer bevorzugten Ausführungsform aus dem Radschlupf ermittelt oder abgeschätzt werden; insbesondere können Druckrampen bzw. Druckgradienten eingestellt werden oder abgeschätzt werden, um maximal mögliche Schlupfwerte möglichst genau zu erreichen.

Das erfindungsgemäß Bremssystem und das erfindungsgemäße Verfahren können somit unter Beibehaltung bisher verwendeter Drucksensoren und der darauf abgestimmten Druckregelkreise durch eine entsprechende Änderung der Software realisiert werden.

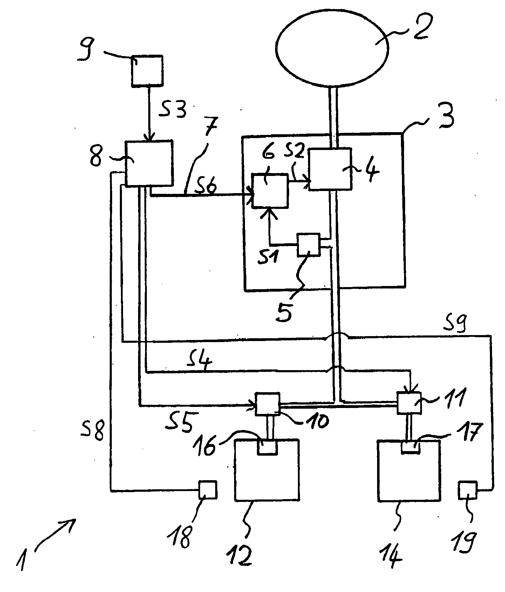

Die Erfindung wird im Folgenden anhand der beiliegenden Zeichnung an einer Ausführungsform näher beschrieben. Die Figur zeigt ein Blockdiagramm eines erfindungsgemäßen Bremssystems.

Ein elektropneumatisches Bremssystem 1 eines Nutzfahrzeuges weist z. B. zwei Kanäle auf, von denen der Kanal für eine Achse, z. B. Vorderachse, in der Figur gezeigt ist. An einen Druckluftspeicher 2 ist ein Bremsdruckmodulator 3 angeschlossen, in dem ein Ventil 4, ein Drucksensor 5 und eine Steuereinrichtung 6 vorgesehen sind, die die Drucksignale S1 des Drucksensors 5 sowie über einen Bus 7 Signale S6 einer zentralen Steuereinrichtung 8 aufnimmt und das Ventil 4 über ein Signal S2 ansteuert.

Die zentrale Steuereinrichtung 8 nimmt unter anderem Soll-Bremssignale S3 eines an das Bremspedal angeschlossenen Bremswertgebers 9 auf und steuert zusätzlich zu dem gezeigten Kanal weitere, hier nicht gezeigte Kanäle, z. B. einer oder mehrerer Hinterachsen sowie ggf. eines Anhängerfahrzeuges. Weiterhin steuert die zentrale Steuereinrichtung 8 über Steuersignale S4, S5 Bremsventile 10, 11, die am Ausgang des Bremsdruckmodulators 3 und vor Radmodulen 12, 14 der Vorderachse angeordnet sind. Neben den Radmodulen 12, 14 sind unter anderem ABS-Ventile 16, 17 und weiterhin Raddrehzahlsensoren 18, 19 vorgesehen, die Drehzahlsignale S8, S9 an die zentrale Steuereinrichtung 8 ausgeben, was direkt oder auch über den Bus 7 erfolgen kann.

Der Bremsmodulator 3 erhält somit über den Bus 7 durch die Signale S6 eine Sollwertvorgabe von der zentralen Steuereinrichtung 8.

Im Druckluftspeicher 2 kann ein Druck von z. B. 12 bar vorliegen. Die Druckregelung im Druckmodulator 3 wird im Normalfall unter einen Grenzbremsdruck von z. B. 10 bar durchgeführt. Der Drucksensor 5 misst den von dem Ventil 4 freigegebenen Druck p zwischen 1 und 10 bar in der Ausgangsleitung und gibt ein Drucksignal S1 aus, dessen Messbereich auch auf 10 bar festgelegt ist, um eine hohe Auflösung zu erhalten. wobei er z. B. ein analoges Messsignal S1 proportional dem gemessenen Druck im Wertebereich zwischen 0,5 V und 5 V liefert.

Der höhere Vorratsdruck von 12 bar wird im normalen Druckregelmodus nicht für die Abbremsung des Fahrzeuges zur Verfügung gestellt, da das Sollwertvorgabe-Signal S6 des Bremssystems nicht den Wertebereich des Drucksensors übersteigt. Es wird somit bei allen normalen Druckersteuerungen eine Druckregelung im Bremsdruckmodulator 3 aufgrund des Drucksensors 5 durchgeführt. Erfindungsgemäß wird erkannt, dass die maximale Bremskraft somit nicht nur durch das Kraftschlussmaximum zwischen dem Reifen und der Fahrbahn begrenzt ist, sondern auch durch den Wertebereich des Drucksensors 5.

Durch Auswertung des Drucksignals bzw. Sensorsignal S1 kann von der dezentralen Steuereinrichtung 6 des Bremsdruckmodulators 3 oder auch der zentralen Steuereinrichtung 8 erkannt werden, dass der Fahrer oder ein weiteres System, z. B. ein Notbremssystem, die maximal mögliche Bremskraft fordert. In diesem Fall wird erfindungsgemäß überprüft, ob der Wertebereich des Drucksensors 5 den auszusteuernden Bremsdruck p begrenzt.

Die erfindungsgemäße Überprüfung, ob der Wertebereich des Drucksensors 5 den auszusteuernden Bremsdruck p begrenzt, kann z. B. auf einfache Weise durch die Abschätzung erfolgen, dass der gemessene Bremsdruck oberhalb von z. B. 9,5 bar liegt; weiterhin kann ggf. das Drucksignal S1 oberhalb des Wertebereichs ausgewertet werden, wobei ein nicht proportionaler Signalverlauf als zumindest Grundlage bzw. grobe Abschätzung eines höheren Druckes dienen kann.

Wenn die Steuereinrichtung 6 erkennt, dass zum einen ein maximaler Bremsdruck bzw. eine maximale mögliche Bremskraft gewünscht ist, und zum anderen der Maximalwert des Drucksignals S1 des Drucksensors 5 den auszusteuernden Bremsdruck begrenzt, wird unter Berücksichtigung von Sicherheitsabfragen vom Druckregelmodus in einen Maximalbremsmodus umgeschaltet, d.h. ohne Berücksichtigung der vom Bremsdruckmodulator 3 ansonsten durchzuführenden Regelung der maximal mögliche Bremsdruck ausgesteuert und somit das Ventil 4 voll geöffnet. Die Steuereinrichtung 6 schließt das Ventil 4 wieder teilweise oder ganz, wenn sie feststellt, dass der oben beschriebene Zustand der maximalen Bremskraftanforderung nicht mehr vorliegt, wenn z. B. über den Bus 7 keine so hohe Bremskraftanforderung mehr kommt oder der Drucksensor 5 nicht mehr übersteuert ist bzw. nicht mehr seinen maximalen Wert anzeigt.

Es ergeben sich erfindungsgemäß folgende Zustände:

### Druckregelmodus:

Bei normalen Bremsanforderungen durch das Bremsanforderungssignal S6 über den Bus 7 und/oder falls nicht erkannt wird, dass das Drucksignal S1 den auszusteuernden Bremsdruck begrenzt, findet eine herkömmliche Druckregelung mittels des Bremsdruckmodulators 3 unter z. B. dem Grenzbremsdruck von 10 bar statt;

Maximalbremsmodus, d.h. Drucksteuerung bei maximaler Bremskraftanforderung: Falls eine maximale Bremskraftanforderung durch das Signal S6 erkannt wird und weiterhin erkannt wird, dass der Maximalwert des Bremssignals S1 den auszusteuernden Bremsdruck begrenzt, wird das Ventil 4 weiter geöffnet.

Die Drucksteuerung oberhalb des Verriegelungsbereichs von 10 bar kann in Abhängigkeit der Art des Ventils 4 bzw. der mehreren Ventile 4 erfolgen. Hierbei können Proportionalventile 4, deren Ventilöffnung variabel steuerbar ist, und Taktventile 4 zum getakteten Öffnen verwendet werden. Der aktuelle Druck kann erfindungsgemäß auf unterschiedliche Weise abgeschätzt werden. Falls der Drucksensor oberhalb des Maximaldruckwertes von z. B. 10 bar ein sich änderndes Drucksignal liefert, z. B. ein nicht linear ansteigendes Drucksignal o, kann dieser nicht lineare Anstieg wiederum einem Druckwert (zunächst grob) zugeordnet werden. Entsprechend kann der Druck auch bei Verwendung eines Taktventils 4 oder mehrerer Taktventile 4 durch adaptives Takten des Belüftungsmagneten gesteuert werden.

Eine genaue Erkennung der Druckhöhe erfolgt vorteilhafterweise aus dem Schlupf des jeweiligen Rades, der aus dem ABS der Radmodule 12, 14 ohnehin ermittelt wird. Bei der Annahme, dass während einer ABS-Regelung sich die BodenVerhältnisse und Radverhältnisse der Bremsen kaum oder nur langsam ändern, kann der Schlupf bzw. das Blockierverhalten des Rades dem Bremsdruck zugeordnet werden.

Es erfolgt jeweils eine Aufsteuerung der Ventile so, dass sich Druckrampen ergeben, damit die maximal mögliche Schlupfwerte möglichst genau erreichbar sind. Es erfolgt somit eine Gradientenbegrenzung. Der Maximalbremsmodus ermöglicht somit eine Bremsung mit z. B. bis zu 12 bar. Sobald erkannt wird, dass der Zustand der maximalen Bremskraftanforderung nicht mehr vorliegt, wird wiederum in dem normalen Druckregelungsmodus bis bzw. unter dem Grenzbremsdruck von 10 bar umgeschaltet.

Das erfindungsgemäße Bremssystem kann zum einen hardwaremäßig durch eine entsprechende Hardware-Steuerung ausgeführt werden. Vorteilhafterweise wird jedoch bei Beibehaltung der Drucksensoren und der darauf abgestimmten Druckregelkreise lediglich die von der Steuereinrichtung 6 des Bremsdruckmodulators 3 verwendete Software geändert.

Erfindungsgemäß kann somit die maximale Verzögerung eines Fahrzeuges und somit auch die Sicherheit des Fahrzeuges durch Verkürzung des Bremsweges erhöht werden.

## Patentansprüche

1. Elektropneumatisches Bremssystem, das mindestens aufweist:
einen Druckluftspeicher (2),
eine Einrichtung (3) zur Bremsdruckregelung, die eine an den Druckluftspeicher (2) angeschlossene Ventileinrichtung (4), einen Drucksensor (5) zur Messung des Bremsdruckes (p) in einer an die Ventileinrichtung (4) angeschlossenen Druckluftleitung und zur Ausgabe eines Drucksignals (S1), und eine Steuereinrichtung (6) zur Aufnahme des Drucksignals (S1) und eines Bremsanforderungssignals (S6) und zur Ansteuerung der Ventileinrichtung (4) aufweist, wobei die Steuereinrichtung (6) in einem Druckregelmodus in Abhängigkeit des Bremsanforderungssignals (S6) durch Ansteuerung der Ventileinrichtung (4) und Aufnahme des Drucksignals (S1) eine Bremsdruckregelung durchführt,
mindestens ein an die Einrichtung (3) zur Bremsdruckregelung angeschlossenes Radmodule (12, 14),
**dadurch gekennzeichnet, dass**
die Steuereinrichtung (6) in dem Fall, dass sie zumindest
- aus dem Bremsanforderungssignal (S6) oder Soll-Bremssignal (S3) eine maximale Bremskraftanforderung erkennt, und
- aus dem Drucksignal (S1) erkennt, dass der Vorratsdruck des Druckluftspeichers (2) höher als der durch die Ventileinrichtung (4) eingestellte Bremsdruck (p) ist, **und**
- **die Steuereinrichtung (6) weiterhin erkennt, dass der von dem Drucksensor (5) in dem Drucksignal (S1) angezeigte Maximaldruck den Bremsdruck (p) begrenzt,**
einen Maximalbremsmodus einstellt indem die Steuereinrichtung (6) die Ventileinrichtung (4) weiter öffnet.

2. Bremssystem nach Anspruch 1, **dadurch gekennzeichnet, dass** die Steuereinrichtung (6) auf eine Begrenzung des Bremsdruckes (p) durch den von dem Drucksensor (5) in dem Drucksignal (S1) angezeigten Maximaldruck schließt, wenn sie erkennt, dass das Drucksignal (S1) einen Maximalwert annimmt, und sie weiterhin den Bremsdruck (p) als nicht maximal bewertet.

3. Bremssystem nach Anspruch 2, **dadurch gekennzeichnet, dass** die Steuereinrichtung (6) im Maximalbremsmodus und/oder zur Erkennung des Maximalbremsmodus den Bremsdruck (p) aus dem Schlupf der Räder ermittelt.

4. Bremssystems nach Anspruch **3 dadurch gekennzeichnet, dass** die Steuereinrichtung (6) aus dem ermittelten Schlupf der Räder Druckrampen ermittelt, die das Verhältnis der eingestellten Ventilöffnung zu dem eingestellten Schlupf wiedergeben, und die Ventileinrichtung (4) entlang der ermittelten Druckrampe verstellt.

5. Bremssystem nach Anspruch **3 oder** 4, **dadurch gekennzeichnet, dass** die Steuereinrichtung (6) aus dem ermittelten Schlupf der Räder Gradienten der Erhöhung des Bremsdrucks (p) in Abhängigkeit der Verstellung der Ventileinrichtung (4) ermittelt und bei der Ansteuerung der Ventileinrichtung (4) die Gradienten begrenzt.

6. Bremssystem nach einem der vorherigen Ansprüche, **dadurch gekennzeichnet, dass** die Steuereinrichtung (6) im Modus der maximalen Bremskraftanforderung das Drucksignal (S1) oberhalb des Druckgrenzwertes auswertet und eine nicht-lineare Zuordnung der Messwerte des Drucksignals (S1) zu dem eingestellten Bremsdruck (**p**) vornimmt.

7. Bremssystem nach einem der vorherigen Ansprüche, **dadurch gekennzeichnet, dass** der von der Einrichtung (3) zur Bremsdruckregelung durchgeführten Regelung eine in den Radmodul (12, 14) durchgeführte Antiblockier-Regelung und/oder Antriebsschlupfregelung überlagert wird.

8. Verfahren zur Steuerung eines Bremssystems **nach einem der Ansprüche 1 bis 7**, bei dem
**der** Drucksensor (5) **den** Bremsdruck (p) in mindestens einer zu Radmodulen (12, 14) führenden Druckluftleitung misst und **das** Drucksignal (S1) ausgibt,
in Abhängigkeit **des** Soll-Bremssignals (S3) eine Bremsanforderung ermittelt wird und aus dem Drucksignal (S1) und der Bremsanforderung **die** Ventileinrichtung (4) angesteuert wird, die den Druckspeicher (2) mit der zu
der zu den Radmodulen (12, 14) führenden Druckluftleitung verbindet,
wobei in einem Druckregelmodus eine Regelung des durch das Drucksignal (S1) angezeigten Bremsdrucks (p) durch Ansteuerung der Ventileinrichtung (4) erfolgt, und
wobei **der** Maximalbremsmodus eingestellt wird, **indem** die Ventileinrichtung (4) weiter geöffnet wird, wenn zumindest
- eine maximale Bremskraftanforderung erkannt wird, und
- aus dem Drucksignal (S1) erkannt wird, dass der Vorratsdruck des Druckluftspeichers (2) höher als der durch die Ventileinrichtung (4) eingestellte Bremsdruck (p) ist, **und**
- **der von dem Drucksensor (5) in dem Drucksignal (S1) angezeigte Maximaldruck den Bremsdruck (p) begrenzt.**

9. Verfahren nach Anspruch **8**, **dadurch gekennzeichnet, dass** im Maximalbremsmodus die Ventileinrichtung (4) derartig geöffnet wird, dass der Bremsdruck (4) oberhalb eines Grenzbremsdrucks des Druckregelmodus liegt.

## Claims

1. Electropneumatic brake system which has at least:
a compressed air accumulator (2),
a device (3) for regulating brake pressure, which device (3) has a valve device (4) which is connected to the compressed air accumulator (2), a pressure sensor (5) for measuring the brake pressure (p) in a compressed air line connected to the valve device (4), and for outputting a pressure signal (S1), and a control device (6) for picking up the pressure signal (S1) and a braking request signal (S6) and for actuating the valve device (4), wherein in a pressure-regulating mode the control device (6) regulates the brake pressure as a function of the braking request signal (S6) by actuating the valve device (4) and picking up the pressure signal (S1),
at least one wheel module (12, 14) which is connected to the device (3) for regulating the brake pressure,
**characterized in that**
if the control device (6) at least
- detects a maximum braking force request from the braking request signal (S6) or setpoint brake signal (S3), and
- detects on the basis of the pressure signal (S1) that the supply pressure of the compressed air accumulator (2) is higher than the brake pressure (p) which has been set by means of the valve device (4), and
- the control device (6) also detects that the maximum pressure indicated by the pressure sensor (5) in the pressure signal (S1) limits the brake pressure (p),
said control device (6) sets a maximum braking mode **in that** the control device (6) opens the valve device (4) further.

2. Brake system according to Claim 1, **characterized in that** the control device (6) closes to a limitation of the brake pressure (p) by the maximum pressure indicated by the pressure sensor (5) in the pressure signal (S1) if said control device (6) detects that the pressure signal (S1) assumes a maximum value and said control device (6) continues to evaluate the brake pressure (p) as not being at a maximum.

3. Brake system according to Claim 2, **characterized in that** in the maximum braking mode and/or in order to detect the maximum braking mode, the control device (6) determines the brake pressure (p) from the slip of the wheels.

4. Brake system according to Claim 3, **characterized in that** the control device (6) determines pressure ramps from the determined slip of the wheels, which pressure ramps represent the ratio of the set valve opening to the set slip, and said control device (6) adjusts the valve device (4) along the pressure ramp which is determined.

5. Brake system according to Claim 3 or 4, **characterized in that** the control device (6) determines gradients of the increase of the brake pressure (p) from the determined slip of the wheel as a function of the adjustment of the valve device (4), and limits the gradients when the valve device (4) is actuated.

6. Brake system according to one of the preceding claims, **characterized in that** in the mode of the maximum braking force request, the control device (6) evaluates the pressure signal (S1) above the pressure limiting value, and makes a non-linear assignment of the measured values of the pressure signal (S1) to the set brake pressure (p).

7. Brake system according to one of the preceding claims, **characterized in that** an anti-lock brake control process and/or traction control process carried out in the wheel module (12, 14) is superimposed on the control which is carried out by the device (3) for controlling the brake pressure.

8. Method for controlling a brake system according to one of Claims 1 to 7, in which
the pressure sensor (5) measures the brake pressure (p) in at least one compressed air line leading to wheel modules (12, 14), and outputs the pressure signal (S1),
a braking request is output as a function of the setpoint braking signal (S3), and the valve device (4) is actuated on the basis of the pressure signal (S1) and the braking request, said valve device (4) connecting the pressure accumulator (2) to the compressed air line which leads to the wheel modules (12, 14),
wherein in a pressure control mode the brake pressure (p) which is indicated by the pressure signal (S1) is controlled by actuating the valve device (4), and
wherein the maximum braking mode is set by opening the valve device (4) further if at least
- a maximum braking force request is detected, and
- it is detected from the pressure signal (S1) that the supply pressure of the compressed air accumulator (2) is higher than the brake pressure (p) which is set by the valve device (4), and
- the maximum pressure which is indicated by the pressure sensor (5) in the pressure signal (S1) limits the brake pressure (p).

9. Method according to Claim 8, **characterized in that** in the maximum braking mode, the valve device (4) is opened in such a way that the brake pressure (4) is above a limiting brake pressure of the pressure control mode.

## Revendications

1. Système électropneumatique de freinage présentant au moins :
une réserve (2) d'air comprimé,
un dispositif (3) de régulation de la pression de freinage qui présente un dispositif de soupape (4) raccordé à la réserve (2) d'air sous pression,
un capteur (5) de pression qui mesure la pression (p) de freinage dans un conduit d'air comprimé raccordé au dispositif (4) de soupape et qui délivre un signal (S1) de pression et
un dispositif de commande (6) qui reçoit le signal (S1) de pression et un signal (S6) de demande de freinage pour commander le dispositif (4) de soupape,
le dispositif de commande (6) exécutant dans un mode de régulation de pression une régulation de la pression de freinage en fonction du signal (S6) de demande de freinage et par commande du dispositif de soupape (4) et réception du signal (S1) de pression,
au moins un module (12, 14) de roue raccordé au dispositif (3) de régulation de pression de freinage, **caractérisé en ce que**
au cas où le dispositif de commande (6) détecte au moins
à partir du signal (S6) de demande de freinage ou du signal (S3) de freinage de consigne une demande maximale de force de freinage et
à partir du signal de pression (S1)
que la pression dans la réserve (2) d'air comprimé est supérieure à la pression de freinage (p) établie par le dispositif de soupape (4) et
où le dispositif de commande (6) détecte en outre que la pression maximale indiquée par le capteur (5) de pression dans le signal de pression (S1) limite la pression de freinage (p),
le dispositif de commande (6) établit un mode de freinage maximum en ouvrant encore davantage le dispositif de soupape (4).

2. Système de freinage selon la revendication 1, **caractérisé en ce que** le dispositif de commande (6) conclut à une limitation de la pression de freinage (p) par la pression maximale affichée par le capteur de pression (5) dans le signal de pression (S1) lorsqu'il reconnaît que le signal de pression (S1) prend une valeur maximale, et qu'il évalue en outre que la pression de freinage (p) n'est pas maximale.

3. Système de freinage selon la revendication 2, **caractérisé en ce qu'**en mode de freinage maximum et/ou pour déterminer le mode de freinage maximum, le dispositif de commande (6) détermine la pression de freinage (p) à partir du patinage des roues.

4. Système de freinage selon la revendication 3, **caractérisé en ce que** le dispositif de commande (6) détermine à partir du patinage qui est déterminé sur les roues des pentes de pression qui introduisent le comportement de l'ouverture de la soupape qui a été établie par rapport au patinage qui s'est établi, et déplace le dispositif de soupape (4) le long de la pente de pression qui a été déterminée.

5. Système de freinage selon les revendications 3 ou 4, **caractérisé en ce que** le dispositif de commande (6) détermine à partir du patinage des roues qui a été déterminé des gradients d'augmentation de la pression de freinage (p) en fonction du déplacement du dispositif de soupape (4), et limite les gradients lors de la commande du dispositif de soupape (4).

6. Système de freinage selon l'une des revendications précédentes, **caractérisé en ce que** dans le mode de demande de force de freinage maximum, le dispositif de commande (6) évalue le signal de pression (S1) au-dessus de la valeur limite de pression et entreprend une association non linéaire des valeurs de mesure du signal de pression (S1) par rapport à la pression de freinage (p) qui a été établie.

7. Système de freinage selon l'une des revendications précédentes, **caractérisé en ce qu'**une régulation antiblocage réalisée dans le module (12, 14) de roue et/ou une régulation du patinage d'entraînement sont superposées à la régulation réalisée par le dispositif (3) de régulation de la pression de freinage.

8. Procédé de commande d'un système de freinage selon l'une des revendications 1 à 7, dans lequel
le capteur de pression (5) mesure la pression de freinage (p) en au moins un conduit d'air comprimé qui conduit aux modules (12, 14) de roue et délivre le signal de pression (S1),
une demande de freinage est déterminée en fonction du signal (S3) de freinage de consigne et le dispositif de soupape (4) qui relie la réserve (2) sous pression au conduit d'air sous pression qui conduit aux modules (12, 14) de roue est commandé à partir du signal de pression (S1) et de la demande de freinage,
une régulation de la pression de freinage (p) indiquée par le signal de pression (S1) est réalisée par commande du dispositif de soupape (4) dans un mode de régulation de pression et
le mode de freinage maximal est établi par le fait que le dispositif de soupape (4) est encore ouvert davantage si au moins
une demande de force maximale de freinage est détectée et si
à partir du signal de pression (S1), il est détecté que la pression de la réserve (2) d'air sous pression est supérieure à la pression de freinage (p) établie par le dispositif de soupape (4) et
la pression maximale affichée par le capteur de pression (5) dans le signal de pression (S1) limite la pression de freinage (p).

9. Procédé selon la revendication 8, **caractérisé en ce que** dans le mode de freinage maximum, le dispositif de soupape (4) est ouvert de telle sorte que la pression de freinage (4) soit située au-dessus d'une pression de freinage limite du mode de régulation de pression.
